# EUROPÄISCHE PATENTSCHRIFT

(11) **EP 1 082 544 B1**
(45) Veröffentlichungstag und Bekanntmachung des Hinweises auf die Patenterteilung: **03.11.2004**
(21) Anmeldenummer: 99962072.7
(22) Anmeldetag: 26.11.1999
(51) Int. Cl.: F04B 53/12, F04B 7/00

(54) **KOLBENPUMPE**
PISTON PUMP
POMPE A PISTON

(30) Priorität: 27.03.1999 DE 19914065
(43) Veröffentlichungstag der Anmeldung: 14.03.2001
(73) Patentinhaber: ROBERT BOSCH GMBH, 70442 Stuttgart (DE)
(72) Erfinder: SIEGEL, Heinz, D-70435 Stuttgart (DE); MARQUARDT, Werner-Karl, D-71706 Markgroeningen (DE)
(86) Internationale Anmeldenummer: PCT/DE1999/003750
(87) Internationale Veröffentlichungsnummer: WO 2000/058627

(56) Entgegenhaltungen:
- DE-A- 3 742 824
- DE-A- 4 425 402
- DE-A- 19 732 818
- US-A- 4 741 679
- US-A- 5 277 553

## Beschreibung

### Stand der Technik

Die Erfindung betrifft eine Kolbenpumpe nach der Gattung des Hauptanspruchs. Sie ist insbesondere zur Verwendung in einer elektrohydraulischen Fahrzeugbremsanlage vorgesehen und dient dort zum Bremsdruckaufbau. Sie kann auch in einer sonstigen, insbesondere schlupfgeregelten Fahrzeugbremsanlage eingesetzt werden.

Eine derartige Kolbenpumpe ist bekannt aus der DE 44 25 402 A1. Die bekannte Kolbenpumpe weist ein Pumpengehäuse auf, in welchem ein Kolben axial verschieblich geführt ist. Der Kolben kann unmittelbar im Pumpengehäuse oder in einer in das Pumpengehäuse eingesetzten Laufbuchse geführt sein. Zum Antrieb des Kolbens weist die bekannte Kolbenpumpe einen elektromotorisch rotierend antreibbaren Exzenter auf, der den Kolben zu einer in axialer Richtung hin- und hergehenden Hubbewegung antreibt. Die Hubbewegung umfaßt einen Förderhub, bei dem ein Volumen eines Verdrängungsraums der Kolbenpumpe verkleinert und zu förderndes Fluid aus der Kolbenpumpe verdrängt wird, und einen Rückhub, bei dem Fluid in den Verdrängungsraum einströmt. Ein Umkehrpunkt des Kolbens am Ende des Förder- und am Beginn des Rückhubs wird für die Zwecke der vorliegenden Erfindung als oberer Totpunkt bezeichnet.

Die Hubbewegung des Kolbens bewirkt in an sich bekannter Weise eine Förderung von zu förderndem Fluid.

Zur Steuerung eines Fluiddurchflusses weist die bekannte Kolbenpumpe ein als federbelastetes Rückschlagventil ausgebildetes Einlaßventil auf, dessen Ventilschließfeder sich ortsfest im Pumpengehäuse abstützt und einen Ventilschließkörper des Einlaßventils gegen einen an einer Kolbenstirnseite ausgebildeten Ventilsitz drückt. Durch die ortsfeste Abstützung der Ventilschließfeder im Pumpengehäuse ändert sich eine Länge der Ventilschließfeder während des Kolbenhubs. Die Längenänderung der Ventilschließfeder bewirkt eine Änderung einer von der Ventilschließfeder auf den Ventilschließkörper ausgeübte Federkraft. Diese den Ventilschließkörper gegen den Ventilsitz drückende Federkraft ist am Ende des Förderhubs und am Beginn des Rückhubs des Kolbens, also am oberen Totpunkt und daher gerade dann am größten, wenn das Einlaßventil zu Beginn des Rückhubs des Kolbens öffnen soll.

Um ein Öffnungsverhalten des Einlaßventils der bekannten Kolbenpumpe zu verbessern, ist dessen Ventilschließkörper mit einem Stift versehen, der reibschlüssig in Eingriff mit einer Buchse steht, die ortsfest im Pumpengehäuse angebracht ist. Die auf den Ventilschließkörper ausgeübte Reibungskraft ist stets einer Bewegung entgegengerichtet, sie wirkt zu Beginn des Rückhubs des Kolbens in einer Öffnungsrichtung auf den Ventilschließkörper. Die Reibungskraft unterstützt dadurch das Öffnen des Einlaßventils zu Beginn des Rückhubs. Die auf den Ventilschließkörper ausgeübte Reibungskraft ist so gewählt, daß sie kleiner ist als eine minimale Federkraft der Ventilschließfeder bei maximaler Länge der Ventilschließfeder, also am unteren Totpunkt des Kolbens, damit das Einlaßventil am unteren Totpunkt von der Ventilschließfeder geschlossen wird. Durch diese Begrenzung der Reibungskraft ist ihre das Öffnen des Einlaßventils unterstützende Wirkung begrenzt, da am oberen Totpunkt des Kolbens, also gerade dann, wenn das Einlaßventils öffnen soll, die Federkraft der Ventilschließfeder am größten ist. Es erfolgt kein zwangsweises Öffnen des Einlaßventils durch die auf dessen Ventilschließkörper von der im Pumpengehäuse ortsfesten Buchse ausgeübte Reibungskraft.

Zum Öffnen des Einlaßventils der bekannten Kolbenpumpe muß eine Druckdifferenz am Ventilschließkörper des Einlaßventils herrschen, der den Ventilschließkörper unterstützt von der auf den Ventilschließkörper ausgeübten Reibungskraft gegen die am oberen Totpunkt maximale Federkraft der Ventilschließfeder vom Ventilsitz abhebt. Diese Druckdifferenz wird während des Rückhubs vom Kolben bewirkt, der das Volumen des Verdrängungsraums der Kolbenpumpe beim Förderhub verkleinert und beim Rückhub vergrößert. Von Nachteil ist, daß zur Bewirkung des zum Öffnen des Einlaßventil notwendigen Druckdifferenz am Einlaßventil der Kolben einen Weg vom oberen Totpunkt in Rückhubrichtung zurücklegen muß. Insbesondere bei niedrigen Temperaturen im Minusbereich verlängert sich der zum Öffnen des Einlaßventils notwendige Kolbenweg aufgrund der zunehmenden Zähflüssigkeit des zu fördernden Fluids, das beispielsweise eine Bremsflüssigkeit ist. Die Verzögerung des Öffnens des Einlaßventils wird noch verstärkt durch Ausgasungseffekte, die sich bei niedrigen Temperaturen beschleunigen. Die Ausgasungseffekte bewirken eine Volumenzunahme des Fluids im Verdrängungsraum der Kolbenpumpe, wenn sich das Volumen des Verdrängungsraums beim Rückhub des Kolbens vergrößert. Durch die Volumenzunahme des Fluids infolge der Ausgasungseffekte verlangsamt sich der Aufbau der Druckdifferenz am Einlaßventil beim Rückhub des Kolbens, der vom Kolben bis zum Öffnen des Einlaßventils zurückgelegte Weg verlängert sich. Es ergibt sich eine Verschlechterung der Förderleistung der Kolbenpumpe.

### Vorteile der Erfindung

Die erfindungsgemäße Kolbenpumpe mit den Merkmalen des Anspruchs 1 weist eine Ventilöffnungseinrichtung auf, die das Einlaßventil am Beginn des Rückhubs des Kolbens zwangsweise öffnet. Das Einlaßventil der erfindungsgemäßen Kolbenpumpe wird unabhängig von einer an ihm anliegenden Druckdifferenz und auch gegen die Kraft einer eventuell vorhandenen Ventilschließfeder geöffnet. Dies bewirkt, daß ab Beginn des Rückhubs des Kolbens zu förderndes Fluid in den Verdrängungsraum der Kolbenpumpe strömt und daß insbesondere auch bei niedrigen Temperaturen der gesamte Rückhub des Kolbens für das Einströmen des zu fördernden Fluids in den Verdrängungsraum zur Verfügung steht und genutzt wird. Die erfindungsgemäße Kolbenpumpe hat den Vorteil einer verbesserten Förderleistung und eines erhöhten Wirkungsgrades insbesondere bei niedrigen Temperaturen.

Zudem hat die erfindungsgemäße Kolbenpumpe einen Ventilhubbegrenzer, der eine Öffnungshub eines Ventilschließkörpers des Einlaßventils begrenzt. Der Ventilhubbegrenzer wirkt während des Rückhubs des Kolbens als Mitnehmer für den Ventilschließkörper des Einlaßventils, der den Ventilschließkörper beim Rückhub des Kolbens in voll geöffneter Stellung mit dem Kolben mitnimmt. Dies hat den Vorteil, daß eine Ventilschfießzeit am Ende des Rückhubs kurz ist.

Die Unteransprüche haben vorteilhafte Ausgestaltungen und Weiterbildungen der im Hauptanspruch angegebenen Erfindung zum Gegenstand.

Um ein Schließverhalten des Einlaßventils zu verbessern, weist die Kolbenpumpe bei einer Ausgestaltung der Erfindung eine Ventilschließfeder für das Einlaßventil auf (Anspruch 2). Diese ist vorzugsweise am Kolben angebracht (Anspruch 3), damit die Federkraft der Ventilschließfeder unabhängig von einer Kolbenstellung ist.

Bei einer Ausgestaltung der Erfindung gemäß Anspruch 4 ist vorgesehen, daß das am Kolben angebrachte Einlaßventil vor Erreichen des oberen Totpunkts am Ende des Förderhubs des Kolbens in einen kraftiösbaren Eingriff mit der Ventilöffnungseinrichtung gelangt, die feststehend im Pumpengehäuse angebracht ist. Der kraftlösbare Eingriff kann auch mit einem Teil der Ventilöffnungseinrichtung bestehen, der feststehend im Pumpenghäuse ist, wogegen ein anderer Teil der Ventilöffnungseinrichtung, der mit dem feststehenden Teil in Eingriff gelangt, mit dem Ventilschließkörper verbunden ist und sich mit diesem mitbewegt. Der kraftlösbare Eingriff ist gemäß Anspruch 7 kraft- bzw. reib- und/oder formschlüssig. Nach Überwindung des oberen Totpunkts hält die Ventilöffnungseinrichtung des Ventilschließkörper des Einlaßventils zurück und öffnet dadurch das Einlaßventil. Die von der Ventilöffnungseinrichtung auf den Ventilschließkörper ausgeübte Eingriffskraft ist so groß, daß sie das Einlaßventil auch gegen die Kraft einer evtl. vorhandenen Ventilschließfeder des Einlaßventils öffnet. Die Ventilöffnungseinrichtung ist bei dieser Ausgestaltung der Erfindung nur wirksam wenn sich der Kolben nahe dem oberen Totpunkt befindet, also zum Schluß des Förder- und zu Beginn des Rückhubs.

Gemäß Anspruch 5 bringt der Ventilhubbegrenzer den Ventilschließkörper des Einlaßventils nach dem Öffnen des Einlaßventils durch die Rückhubbewegung des Kolbens außer Eingriff von der Ventilöffnungseinrichtung, so daß das Einlaßventil wie ein herkömmliches Rückschlagventil wirkt und am Ende des Rückhubs selbsttätig schließt.

Bei der Ausgestaltung gemäß Anspruch 6 steht der Ventilschließkörper des Einlaßventils während der gesamten Kolbenbewegung reibschlüssig in Eingriff mit der Ventilöffnungseinrichtung. Das Einlaßventil wird dadurch zwangsläufig am Beginn des Kolbenrückhubs geöffnet und während des Rückhubs offen gehalten. Am Beginn des Förderhubs wird das Einlaßventil durch die Ventilöffnungseinrichtung wieder geschlossen und während des Förderhubs geschlossen gehalten.

Vorzugsweise ist der Kolben der erfindungsgemäßen Kolbenpumpe gemäß Anspruch 8 als Stufenkolben ausgebildet. Der Stufenkolben ist an seinem dem Verdrängungsraum zugewandten Ende auf einem größeren Durchmesser geführt als an seinem dem Verdrängungsraum fernen Ende. Dadurch entsteht ein den Kolben auf seinem kleineren Durchmesser umgebender Ringraum, dessen Volumen sich beim Förderhub des Kolbens vergrößert und beim Rückhub verkleinert. Die Vergrößerung des Ringraums beim Förderhub bewirkt ein Ansaugen von zu förderndem Fluid. Beim Rückhub wird zwar das Volumen des Ringraums verkleinert, jedoch nimmt das Volumen des Verdrängungsraums der Kolbenpumpe in größerem Maße zu, so daß zu förderndes Fluid aus dem Ringraum in den Verdrängungsraum überströmt. Die Verwendung eines Stufenkolbens in der erfindungsgemäßen Kolbenpumpe hat den Vorteil, daß durch das zwangsweise am Beginn des Rückhubs öffnende Einlaßventil zu förderndes Fluid aus dem Ringraum in den Verdrängungsraum überströmt, wobei das Überströmen durch eine Trägheit von während des Förderhubs in den Ringraum angesaugten und dabei beschleunigten Fluids unterstützt wird. Wird das Einlaßventil nicht zwangsweise geöffnet, verursacht das Einlaßventil am Beginn des Rückhubs des Kolbens einen Gegendruck auf einer Zuströmseite des Einlaßventils, der das während des Förderhubs im Einlaß der Kolbenpumpe beschleunigte, zu fördernde Fluid abbremst und einem Überströmen von während des Förderhubs in den Ringraum angesaugten Fluids in den Verdrängungsraum der Kolbenpumpe entgegenwirkt.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand eines in der Zeichnung dargestellten, bevorzugt ausgewählten Ausführungsbeispiel näher erläutert. Es zeigen
- Figur 1: einen Achsenschnitt einer erfindungsgemäßen Kolbenpumpe;
- Figur 2: eine Ansicht eines Einzelteils der Kolbenpumpe aus Figur 1;
- Figur 3: eine Einzelheitdarstellung einer abgewandelten Ausführungsform der Erfindung gemäß Pfeil III in Figur 1; und
- Figur 4: einen Achsenschnitt einer weiteren Ausführungsform einer erfindungsgemäßen Kolbenpumpe;

### Beschreibung der Ausführungsbeispiele

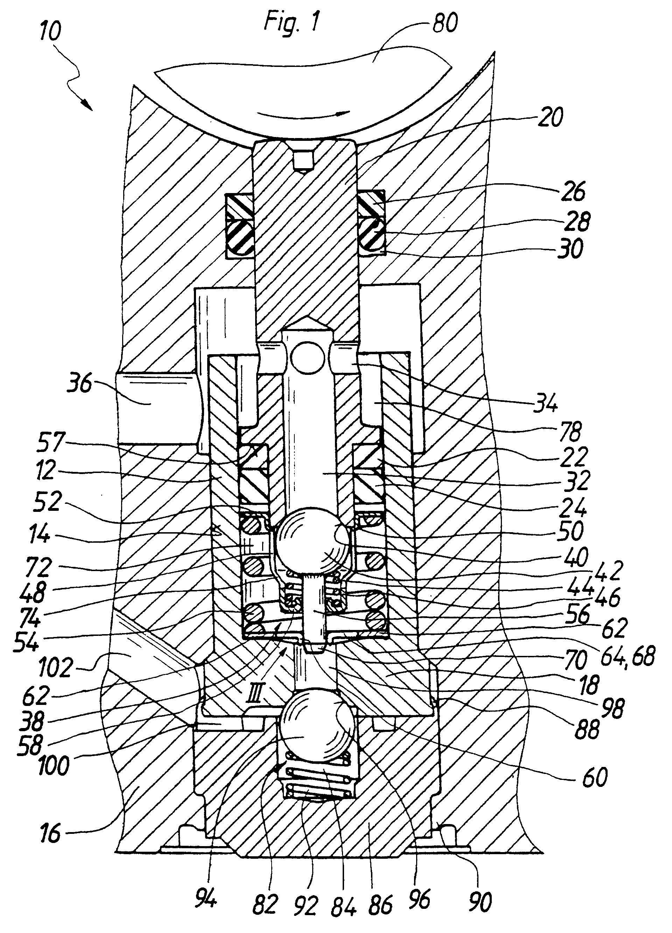

Die in Figur 1 dargestellte, insgesamt mit 10 bezeichnete erfindungsgemäße Kolbenpumpe weist eine Laufbuchse 12 auf, die in eine gestufte Pumpenbohrung 14 eines Hydraulikblocks eingesetzt ist, der ein Pumpengehäuse 16 bildet. Die Laufbuchse 12 weist einen mit ihr einstückigen Laufbuchsenboden 18 auf. Der Hydraulikblock, von dem in der Zeichnung der klaren Darstellbarkeit wegen lediglich ein die Kolbenpumpe 10 umgebendes Bruchstück dargestellt ist, ist Teil einer elektrohydraulischen oder auch schlupfgeregelten, im übrigen nicht dargestellten Fahrzeugbremsanlage. In ihn sind außer der Kolbenpumpe 10 weitere, nicht dargestellte hydraulische Bauelemente wie Magnetventile und Hydrospeicher eingesetzt und hydraulisch miteinander verschaltet. An den Hydraulikblock sind nicht dargestellte Radbremszylinder angeschlossen.

In der Laufbuchse 12 ist ein bolzenförmiger Kolben 20 über etwa die Hälfte seiner Länge aufgenommen. Ein in der Laufbuchse 12 befindliches Ende des Kolbens 20 ist mit einem Führungsring 22 an der Innenoberfläche der Laufbuchse 12 axial verschieblich geführt und mit einem Dichtring 24 abgedichtet. Ein aus der Laufbuchse 12 vorstehendes Ende des Kolbens 20 ist mit einem Führungsring 26 in der Pumpenbohrung 14 geführt und mit einem Dichtring 28 abgedichtet, die beide in einer Nut 30 im Pumpengehäuse 16 einliegen. Der Kolben 20 ist als Stufenkolben ausgebildet, d. h. er ist in der Laufbuchse 12 auf einem größeren Durchmesser geführt und abgedichtet als an seinem aus der Laufbuchse 12 vorstehenden Ende.

Zum Fluideinlaß ist der Kolben 20 mit einer axialen Sackbohrung 32 von seinem in der Laufbuchse 12 befindlichen Ende her versehen, die nahe ihres Grundes von Querbohrungen 34 gekreuzt wird. Ein Nenndurchmesser des Kolbens 20 entspricht einem Innendurchmesser der Laufbuchse 12, wobei eine Spielpassung zwischen Kolben 20 und Laufbuchse 12 besteht, d. h. der Kolben 20 weist in Bezug auf die Laufbuchse 12 ein Untermaß auf, das die Axialverschiebbarkeit des Kolbens 20 gewährleistet. Sackbohrung 32 und Querbohrungen 34 kommunizieren mit einer Einlaßbohrung 36, die radial zur Kolbenpumpe 12 in die Pumpenbohrung 14 mündet.

Als Einlaßventil 38 weist die erfindungsgemäße Kolbenpumpe 10 ein federbelastetes Rückschlagventil auf, welches an dem in der Laufbuchse 12 befindlichen Ende des Kolbens 20 angebracht ist: Eine Mündung der Sackbohrung 32 ist als konischer Ventilsitz 40 ausgebildet, gegen den eine Ventilkugel 42 als Ventilschließkörper von einer Schraubendruckfeder als Ventilschließfeder 44 gedrückt wird. Die Ventilschließfeder 44 stützt sich gegen einen Boden eines topfförmigen Ventilkäfigs 46 ab, der als Tiefziehteil aus Blech hergestellt ist und Durchlässe 48 aufweist. An seiner offenen Seite weist der Ventilkäfig 46 eine umlaufende Ringstufe 50, mit der er an der in der Laufbuchse 12 befindlichen Stirnseite des Kolbens 20 anliegt, und einen Radialflansch 52 auf, an dem er von einer Kolbenrückstellfeder 54 gegen die Stirnseite des Kolbens 20 gedrückt wird. Ventilkugel 42 und Ventilschließfeder 44 sind im Ventilkäfig 46 aufgenommen. Die Kolbenrückstellfeder 54, die sich gegen den Laufbuchsenboden 18 abstützt, ist stärker ausgebildet als die Ventilschließfeder 44, so daß sie den Ventilkäfig 46 bei allen beim Betrieb der Kolbenpumpe 10 auftretenden Belastungen sicher an der Stirnseite des Kolbens 20 hält.

Der in der Laufbuchse 12 befindliche Führungsring 22 und Dichtring 24 sind in axialer Richtung zwischen dem Radialflansch 52 des Ventilkäfigs 46 und einer Ringstufe 57 des Kolbens 20 auf dem Kolben 20 fixiert. Ein Abstand der Ringstufe 57 vom Radialflansch 52 ist so bemessen, daß der Führungsrings 22 und der Dichtring 24 nicht gestaucht werden.

Der Antrieb des Kolbens 20 zu einer in axialer Richtung hin- und hergehenden Hubbewegung erfolgt mittels eines Exzenters 80, der mit einem nicht dargestellten Elektromotor rotierend antreibbar ist. Der Exzenter 80 befindet sich auf der aus der Laufbuchse 12 vorstehenden Seite des Kolbens 20, der Kolben 20 wird von der Kolbenrückstellfeder 54 in Anlage an einen Umfang des Exzenters 80 gedrückt und gehalten.

Die erfindungsgemäße Kolbenpumpe 10 weist eine Ventilöffnungseinrichtung auf, die das Einlaßventil 38 zwangsweise zu Beginn eines Rückhubs des Kolbens 20 gegen die Kraft der Ventilschließfeder 44 unabhängig von einer am Einlaßventil 38 anliegenden Druckdifferenz öffnet: An der Ventilkugel 42 ist durch Schweißen ein Öffnerstift 56 angebracht, der axial zur Kolbenpumpe 10 auf einer dem Kolben 20 abgewandten Seite der Ventilkugel 42 angeordnet ist. Der Öffnerstift 56 durchsetzt ein Loch in einem Boden 58 des Ventilkäfigs 46, wobei der Boden 58 des Ventilkäfigs 46 am Rand des vom Öffnerstift 56 durchsetzten Lochs zu einem gerundeten Kragen 60 umgeformt ist, der den Öffnerstift 56 der Ventilkugel 42 nach Art einer Führungsbuchse axial verschieblich führt.

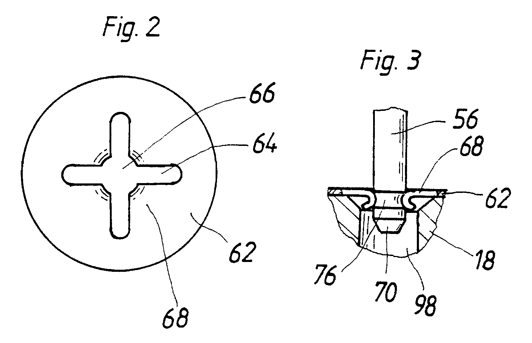

Auf eine Innenseite des Laufbuchsenbodens 18 ist das in Figur 2 dargestellte Ventilöffnerteil 62 aufgelegt, das von der Kolbenrückstellfeder 54 auf dem Laufbuchsenboden 18 gehalten wird. Das Ventilöffnerteil 62 ist eine kreisrunde Scheibe aus Blech, die mit zwei einander kreuzenden Schlitzen 64 versehen ist, die im Kreuzungsbereich in der Mitte des kreisscheibenförmigen Ventilöffnerteils 62 zu einem Loch 66 aufgeweitet sind. Die Schlitze 64 begrenzen Federlaschen 68 zwischen sich, deren das Loch 66 begrenzende freie Enden von der Ventilkugel 42 weggebogen sind. Der Öffnerstift 56 ist an seinem freien Ende mit einer Fase 70 versehen.

Die Funktion der erfindungsgemäßen Ventilöffnungseinrichtung ist folgende: Am Ende eines Förderhubs des Kolbens 20, bei dem sich der Kolben 20 in die Laufbuchse 12 hineinverschiebt und dadurch ein Volumen eines vom Kolben 20 in der Laufbuchse 12 eingeschlossenen Verdrängungsraums 72 verkleinert, gelangt der Öffnerstift 56 in das Loch 66 des Ventilöffnerteils 62, wobei die Fase 70 des Öffnerstifts 56 den Öffnerstift 56 in das Loch 66 des Ventilöffnerteils 62 führt. Während des Förderhubs wird in an sich bekannter Weise in den Verdrängungsraum 72 angesaugte Bremsflüssigkeit vom Kolben 20 aus dem Verdrängungsraum 72 verdrängt und dadurch gefördert. Das Loch 66 im Ventilöffnerteil 62 weist ein Untermaß in Bezug auf den Öffnerstift 56 der Ventilkugel 42 auf, das Ventilöffnerteil 62 übt eine Reibungskraft auf den Öffnerstift 56 aus. Nachdem der Kolben 20 seinen oberen Totpunkt erreicht hat, wobei dies im Rahmen der vorliegenden Erfindung derjenige Punkt ist, an dem sich der Kolben 20 am tiefsten in der Laufbuchse 12 befindet, bewegt sich der Kolben 20 wieder aus der Laufbuchse 12 heraus, er beginnt seinen Rückhub. Die Reibungskraft zwischen dem Ventilöffnerteil 62 und dem Öffnerstift 56 ist größer als eine Federkraft der Ventilschließfeder 44. Dadurch hält das Ventilöffnerteils 62 zu Beginn des Rückhubs des Kolbens 20 die Ventilkugel 42 an deren Öffnerstift 56 zurück, wodurch das Einlaßventil 38 zwangsweise durch die Rückhubbewegung des Kolbens 20 geöffnet wird. Die Öffnung des Einlaßventils 38 erfolgt gegen die Kraft der Ventilschließfeder 44 und auch gegen eine eventuell am Einlaßventil 38 anliegende, dem Öffnen des Einlaßventils 38 entgegengerichtete Druckdifferenz.

Ein Ventilhub des Einlaßventils 38 wird von einem Ventilhubbegrenzer 74 begrenzt, der als den Ventilkäfig 46 konisch verjüngende Ringstufe ausgebildet ist. Sobald die vom Ventilöffnerteil 62 am Öffnerstift 56 rückgehaltene Ventilkugel 42 des Einlaßventils 38 infolge des Rückhubs des Kolbens 20 am Ventilhubbegrenzer 74 anliegt, wird die Ventilkugel 42 vom Ventilhubbegrenzer 74 mit dem Kolben 20 mitgenommen und dadurch der Öffnerstift 56 aus dem Loch 66 des Ventilöffnerteils 62 herausgezogen. Der Öffnerstift 56 kommt also vom Ventilöffnerteil 62 frei, sobald das Einlaßventil 38 zu Beginn des Rückhubs des Kolbens 20 vom Ventilöffnerteil 62 geöffnet worden ist. Das Einlaßventil 38 wirkt dann wie ein herkömmliches, federbelastetes Rückschlagventil, es wird, nachdem es vom Ventilöffnerteil 62 geöffnet worden ist, während des Rückhubs des Kolbens 20 wie von Kolbenpumpen 10 an sich bekannt von einer am Einlaßventil 38 anliegenden Druckdifferenz gegen die Kraft der Ventilschließfeder 44 offen gehalten.

Die erfindungsgemäße Ventilöffnungseinrichtung mit dem Ventilöffnerteil 62 und dem Öffnerstift 56 hat den Vorteil, daß das Einlaßventil 38 der Kolbenpumpe 10 zu Beginn des Rückhubs des Kolbens 20 zwangsweise geöffnet wird, und zwar auch dann, wenn am Einlaßventil 38 noch keine Druckdifferenz wirksam ist oder die Druckdifferenz zu gering ist, um das Einlaßventil 38 gegen die Kraft der Ventilschließfeder 44 zu öffnen. Das Einströmen von Bremsflüssigkeit in den Verdrängungsraum 72 der Kolbenpumpe 10 und damit eine Füllung der Kolbenpumpe 10 werden dadurch verbessert, der Wirkungsgrad der Kolbenpumpe 10 steigt. Die Ventilöffnungseinrichtung 56, 62 ist insbesondere bei zähflüssiger, kalter Bremsflüssigkeit von Vorteil, d. h. bei Temperaturen unter -20° Celsius oder -30° Celsius, bei denen die Zähflüssigkeit der Bremsflüssigkeit das Saugverhalten herkömmlicher Kolbenpumpen erheblich verschlechtert. Das Saugverhalten der erfindungsgemäßen Kolbenpumpe 10 ist insbesondere bei der Förderung eines zähflüssigen Fluids, also bei tiefen Temperaturen, erheblich verbessert.

Figur 3 zeigt eine Weiterbildung der erfindungsgemäßen Kolbenpumpe 10. Bei dieser Ausgestaltung der Erfindung ist der Öffnerstift 56 mit einer Ringnut 76 mit gerundetem Querschnitt versehen, in die die Federlaschen 68 des Ventilöffnerteils 62 am oberen Totpunkt des Kolbens 20 eingreifen. Dadurch wird der Öffnerstift 56 beim Öffnen des Einlaßventils 38 reib- und kraftschlüssig gehalten, bis der Ventilhubbegrenzer 74 den Öffnerstift 56 während des Rückhubs des Kolbens 20 aus dem Ventilöffnerteil 62 herauszieht.

Da der Kolben 20 als Stufenkolben ausgebildet ist, besteht ein Ringraum 78 zwischen dem Kolben 20 und der Laufbuchse 12. Ein Volumen des Ringraums 78 vergrößert sich während des Förderhubs des Kolbens 20 und verkleinert sich während des Rückhubs. Auf diese Weise wird während des Förderhubs des Kolbens 20, bei dem das Einlaßventil 38 geschlossen ist, Bremsflüssigkeit aus der Einlaßbohrung 36 angesaugt und die Bremsflüssigkeit im Einlaßbereich der Kolbenpumpe 10 beschleunigt. Beim Rückhub des Kolbens 20 verkleinert sich zwar das Volumen des Ringraums 78, jedoch vergrößert sich das Volumen des Verdrängungsraum 72 in größerem Maße, so daß Bremsflüssigkeit aus der Sackbohrung 32 im Kolben 20 bei geöffnetem Einlaßventil 38 in den Verdrängungsraum 72 einströmt. Die Ventilöffnungseinrichtung 56, 62 der erfindungsgemäßen Kolbenpumpe 10, die das Einlaßventil 38 zu Beginn des Rückhubs des Kolbens 20 öffnet, nutzt die Trägheit der während des Förderhubs beschleunigten Bremsflüssigkeit in der Einlaßbohrung 36 aus, die das Einströmen der Bremsflüssigkeit durch die Querbohrungen 34 und die Sackbohrung 32 und das von der Ventilöffnungseinrichtung 56, 62 geöffnete Einlaßventil 38 in den Verdrängungsraum 72 unterstützt. Bei einem herkömmlichen federbelasteten Einlaßventil, das nicht von einer Ventilöffnungseinrichtung zwangsweise geöffnet wird, würde zunächst die von der Ventilschließfeder 44 gegen den Ventilsitz 40 gedrückte Ventilkugel 42 des geschlossenen Einlaßventils 38 zu Beginn des Rückhubs die durch die Einlaßbohrung 36 der Kolbenpumpe 10 zuströmende Bremsflüssigkeit abbremsen und dadurch einem Einströmen von Bremsflüssigkeit in den Verdrängungsraum 72 entgegenwirken.

Ein Auslaßventil 82 der Kolbenpumpe 10 ist als federbelastetes Rückschlagventil ausgebildet, es ist in einem axialen Sackloch 84 in einem stopfenförmigen Verschlußelement 86 untergebracht, wobei das Verschlußelement 86 die Pumpenbohrung 14 druckdicht verschließt. Das Verschlußelement 86 ist auf den Laufbodenbuchsen 18 aufgesetzt und mit dem Bördel 88 mit der Laufbuchse 12 verbunden. Durch eine umlaufende Verstemmung 90 des Pumpengehäuses 16 ist das Verschlußelement 86 in der Pumpenbohrung 14 befestigt und verschließt die Pumpenbohrung 14 druckdicht.

In das axiale Sackloch 84 des Verschlußelements 86 ist eine Schraubendruckfeder als Ventilschließfeder 92 eingesetzt, die eine Ventilkugel 94 gegen einen konischen Ventilsitz 96 drückt, welcher an einer Mündung eines Mittellochs 98 angebracht ist, die den Laufbuchsenboden 18 axial durchsetzt. Der Ventilsitz 96 ist durch Prägen geformt und verfestigt. Ein Auslaß der Bremsflüssigkeit erfolgt durch Radialkanäle 100 zwischen dem Laufbuchsenboden 18 und dem Verschlußelement 86 in eine Auslaßbohrung 102 im Pumpengehäuse 16.

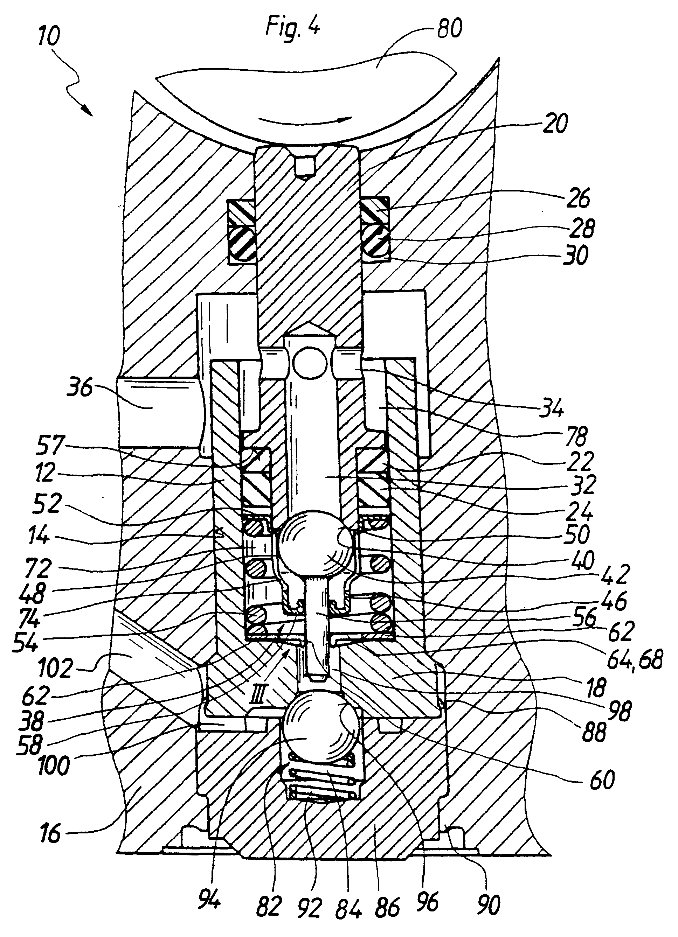

Figur 4 zeigt eine abgewandelte Ausführungform der Erfindung. Zur Vermeidung von Wiederholungen werden nachfolgend die Abweichungen zu Figur 1 beschrieben und es wird im übrigen auf die vorstehenden Erläuterungen verwiesen. Für gleiche Bauteile werden gleiche Bezugszeichen verwendet.

Bei der in Figur 4 dargestellten Kolbenpumpe 10 ist das Einlaßventil 38 federlos, es ist wie in Figur 1 als Rückschlagventil ausgebildet, jedoch fehlt die Ventilschließfeder.

Weiterer Unterschied ist, daß der an der Ventilkugel 42 des Einlaßventils 38 angebrachte Öffnerstift 56 länger ist, er greift in jeder Stellung des Kolbens 20 in das Ventilöffnerteil 62 ein. Das Ventilöffnerteil 62 übt stets eine Reibungskraft auf die Ventilkugel 44 aus, die das Einlaßventil 38 zu Beginn des Rückhubs des Kolbens 20 zwangsweise öffnet und während des Rückhubs offen hält. Dabei begrenzt der als Mitnehmer wirkende Ventilhubbegrenzer 74 den Öffnungshub, um den die Ventilkugel 42 vom Ventilsitz 40 abgehoben wird und nimmt die Ventilkugel 42 bei voll geöffnetem Einlaßventil 38 mit dem Kolben 20 mit. Zu Beginn des Förderhubs des Kolbens 20 schließt das Ventilöffnerteil 62 durch die von ihm über den Öffnerstift 56 auf die Ventilkugel 42 ausgeübte Reibungskraft das Einlaßventil 38. Dabei ist der vom Kolben 20 zum Schließen des Einlaßventils zurückgelegte Weg in Richtung des Förderhubs auf den vom Ventilhubbegrenzer 74 vorgegebenen Öffnungshub des Einlaßventils 38 begrenzt.

## Patentansprüche

1. Kolbenpumpe mit einem in einem Pumpengehäuse axial verschieblich aufgenommenen Kolben, der zu einer in axialer Richtung hin- und hergehenden, einen Förderhub und einen Rückhub umfassenden Hubbewegung antreibbar ist, und mit einem als Rückschlagventil ausgebildeten Einlaßventil, das am Kolben angebracht ist, wobei die Kolbenpumpe (10) eine Ventilöffnungseinrichtung (56, 62) aufweist, die das Einlaßventil (38) zu Beginn des Rückhubs des Kolbens (20) öffnet, **dadurch gekennzeichnet daß** das Einlaßventil (38) einen Ventilhubbegrenzer (74) aufweist, der einen Öffnungshub eines Ventilschließkörpers (42) des Einlaßventils (38) begrenzt und der einen Mitnehmer für den Ventilschließkörper (42) des Einlaßventils (38) bildet, der den von einem Ventilsitz (40) des Einlaßventils (38) um den Öffnungshub abgehobenen Ventilschließkörper (42) des Einlaßventils (38) während des Rückhubs des Kolbens (20) mit dem Kolben (20) mitnimmt.

2. Kolbenpumpe nach Anspruch 1, **dadurch gekennzeichnet, daß** das Einlaßventil (38) als federbelastetes Rückschlagventil ausgebildet ist.

3. Kolbenpumpe nach Anspruch 2, **dadurch gekennzeichnet, daß** eine Ventilschließfeder (44) des Einlaßventils (38) am Kolben (20) angebracht ist.

4. Kolbenpumpe nach Anspruch 1, **dadurch gekennzeichnet, daß** der Ventilschließkörper (42) des Einlaßventils (38) vor Erreichen eines Endes des Förderhubs des Kolbens (20) in einen kraftlösbaren Eingriff mit der Ventilöffnungseinrichtung (56, 62) gelangt, wobei eine von der Ventilöffnungseinrichtung (56, 62) auf den Ventilschließkörper (42) ausgeübte Kraft so groß ist, daß sie das Einlaßventil (38) zu Beginn des Rückhubs des Kolbens (20) öffnet.

5. Kolbenpumpe nach Anspruch 4, **dadurch gekennzeichnet, daß** der Ventilhubbegrenzer (74) den Ventilschließkörper (42) während des Rückhubs des Kolbens (20) außer Eingriff von der Ventilöffnungseinrichtung (56, 62) bringt, nachdem der in kraftlösbarem Eingriff mit der Ventilöffnungseinrichtichtung (56, 62) stehende Ventilschließkörper (42) des Einlaßventils (38) durch den Rückhub des Kolbens (20) um den Öffnungshub vom Ventilsitz (40) des Einlaßventils (38) abgehoben worden ist.

6. Kolbenpumpe nach Anspruch 1, **dadurch gekennzeichnet, daß** der Ventilschließkörper (42) des Einlaßventils (38) während des gesamten Kolbenhubs reibschlüssig in Eingriff mit der Ventilöffnungseinrichtung (56, 62) steht, wobei eine von der Ventilöffnungseinrichtung (56, 62) auf den Ventilschließkörper (42) ausgeübte Reibungskraft so groß ist, daß sie das Einlaßventil (38) zu Beginn des Rückhubs des Kolbens (20) öffnet.

7. Kolbenpumpe nach Anspruch 1, **dadurch gekennzeichnet, daß** der Eingriff des Ventilschließkörpers (42) mit der Ventilöffnungseinrichtung (56, 62) kraftund/oder formschlüssig ist.

8. Kolbenpumpe nach Anspruch 1, **dadurch gekennzeichnet, daß** der Kolben (20) als Stufenkolben ausgebildet ist.

## Claims

1. Piston pump, with a piston which is received axially displaceably in a pump casing and can be driven in an axially to-and-fro stroke movement comprising a conveying stroke and a return stroke, and with an inlet valve which is designed as a non-return valve and is mounted on the piston, the piston pump (10) having a valve-opening device (56, 62) which opens the inlet valve (38) at the commencement of the return stroke of the piston (20), **characterized in that** the inlet valve (38) has a valve-stroke limiter (74) which limits an opening stroke of a valve-closing body (42) of the inlet valve (38) and which forms, for the valve-closing body (42) of the inlet valve (38), a driver which by means of the piston (20), during the return stroke of the said piston, drives the valve-closing body (42) of the inlet valve (38), which valve-closing body is lifted off from a valve seat (40) of the inlet valve (38) by the amount of the opening stroke.

2. Piston pump according to Claim 1, **characterized in that** the inlet valve (38) is designed as a springloaded non-return valve.

3. Piston pump according to Claim 2, **characterized in that** a valve-closing spring (44) of the inlet valve (38) is mounted on the piston (20).

4. Piston pump according to Claim 1, **characterized in that** the valve-closing body (42) of the inlet valve (38) comes into force-releasable engagement with the valve-opening device (56, 62) before one end of the conveying stroke of the piston (20) is reached, a force exerted on the valve-closing body (42) by the valve-opening device (56, 62) being such that it opens the inlet valve (38) at the commencement of the return stroke of the piston (20).

5. Piston pump according to Claim 4, **characterized in that** the valve-stroke limiter (74) disengages the valve-closing body (42) from the valve-opening device (56, 62) during the return stroke of the piston (20), after the valve-closing body (42) of the inlet valve (38), which valve-closing body is in force-releasable engagement with the valve-opening device (56, 62), has been lifted off from the valve seat (40) of the inlet valve (38) by the amount of the opening stroke as a result of the return stroke of the piston (20).

6. Piston pump according to Claim 1, **characterized in that** the valve-closing body (42) of the inlet valve (38) is in frictional engagement with the valve-opening device (56, 62) during the entire piston stroke, a frictional force exerted on the valve-closing body (42) by the valve-opening device (56, 62) being such that it opens the inlet valve (38) at the commencement of the return stroke of the piston (20).

7. Piston pump according to Claim 1, **characterized in that** the engagement of the valve-closing body (42) with the valve-opening device (56, 62) is non-positive and/or positive.

8. Piston pump according to Claim, **characterized in that** the piston (20) is designed as a step piston.

## Revendications

1. Pompe à piston comportant un piston coulissant axialement dans un corps de pompe, ce piston étant entraîné par un mouvement alternatif dans la direction axiale pour exécuter une course de transfert et une course de retour, ainsi qu'une soupape d'admission en forme de clapet antiretour installée sur le piston, dans lequel :
la pompe à piston (10) comporte une installation d'ouverture de soupape (56, 62) qui ouvre la soupape d'entrée (38) au début de la course de retour du piston (20),
**caractérisée en ce que**
la soupape d'entrée (38) comporte un limiteur de course de soupape (74) qui limite la course d'ouverture d'un organe d'obturation (42) de la soupape d'entrée (38) et forme un moyen d'entraînement de l'organe d'obturation (42) de la soupape d'entrée (38), cet organe d'entraînement entraînant l'organe d'obturation (42) de la soupape d'entrée (38), soulevé suivant la course d'ouverture par rapport à un siège (40) de la soupape d'entrée (38) pendant la course de retour du piston (20) en l'entraînant avec le piston (20).

2. Pompe à piston selon la revendication 1,
**caractérisée en ce que**
la soupape d'entrée (38) est un clapet antiretour chargé par ressort.

3. Pompe à piston selon la revendication 2,
**caractérisée en ce que**
le piston (20) porte un ressort d'obturation (44) de la soupape d'entrée (38).

4. Pompe à piston selon la revendication 1,
**caractérisée en ce que**
l'organe d'obturation (42) de la soupape d'entrée (38), avant d'atteindre une fin de la course de transfert du piston (20) arrive en prise sans force avec l'installation d'ouverture de soupape (56, 62) ;
la force exercée par l'installation d'ouverture de soupape (56, 62) sur l'organe d'obturation de soupape (42) étant suffisamment grande pour ouvrir la soupape d'entrée (38) au début de la course de retour du piston (20).

5. Pompe à piston selon la revendication 4,
**caractérisée en ce que**
pendant la course de retour du piston (20), le limiteur de course de soupape (74) met l'organe d'obturation (42) hors de prise de l'installation d'ouverture de soupape (56, 62) après que l'organe d'obturation (42) de la soupape d'entrée (38) en prise sans force avec l'installation d'ouverture de soupape (56, 62) ait été soulevé par la course de retour du piston (20) de la course d'ouverture par rapport au siège (40) de la soupape d'entrée (38).

6. Pompe à piston selon la revendication 1,
**caractérisée en ce que**
pendant toute la course du piston, l'organe d'obturation (42) de la soupape d'entrée (38) est en prise par une liaison de friction avec l'installation d'ouverture de soupape (56, 62), et la force de friction exercée par l'installation d'ouverture de soupape (56, 62) sur l'organe d'obturation (42) est suffisamment grande pour ouvrir la soupape d'entrée (38) au début de la course de retour du piston (20).

7. Pompe à piston selon la revendication 1,
**caractérisée en ce que**
la prise entre l'organe d'obturation de soupape (42) et l'installation d'ouverture de soupape (56, 62) est une liaison par la force et/ou par la forme.

8. Piston selon la revendication 1,
**caractérisé en ce que**
le piston (20) est un piston étagé.
